# EUROPEAN PATENT SPECIFICATION

(11) **EP 4 677 215 B1**
(45) Date of publication and mention of the grant of the patent: **28.10.2026**
(21) Application number: 24717673.8
(22) Date of filing: 05.04.2024
(51) Int. Cl.: F03D 1/06, F03D 80/50

(54) **METHOD FOR RETROFITTING SECURING MEANS FOR SECURING MOUNTING INSERTS EMBEDDED IN A ROOT OF WIND TURBINE BLADE**
VERFAHREN ZUM NACHRÜSTEN VON BEFESTIGUNGSMITTELN ZUM SICHERN VON IN EINEM FUSS EINER WINDTURBINENSCHAUFEL EINGEBETTETEN BEFESTIGUNGSEINSÄTZEN
PROCÉDÉ DE RÉÉQUIPEMENT DE MOYENS DE FIXATION POUR FIXER DES INSERTS DE MONTAGE INTÉGRÉS DANS UNE RACINE DE PALE D'ÉOLIENNE

(30) Priority: 08.05.2023 EP 23382424
(43) Date of publication of application: 14.01.2026
(73) Proprietor: Siemens Gamesa Renewable Energy Eolica S.L., 31192 Sarriguren (Navarra) (ES)
(72) Inventor: GONZALEZ VAZQUEZ, Francisco Javier, 48920 Portugalete (ES); JONES, Harry LLywelyn, 31600 Burlada (ES); ORDUNA REMÓN, Javier, 31016 Pamplona (ES); VERBURG RIEZU, Yonatan, 31180 Zizur Mayor (ES)
(74) Representative: SGRE-Association
(86) International application number: PCT/EP2024/059325
(87) International publication number: WO 2024/230995

(56) References cited:
- EP-A1- 3 508 718
- EP-A2- 2 728 171
- WO-A1-2021/155896
- DE-A1- 102017 126 970
- US-A1- 2021 180 572

## Description

The invention refers to a method for retrofitting securing means for securing mounting inserts embedded in a root of a wind turbine blade, which mounting inserts each comprise at least one stud extending axially from the root.

Wind turbine blades comprise a tip portion and a root portion. The root portion will be mounted to a hub and/or a blade bearing of the wind turbine. Connection means are arranged within the root portion. These connection means can be connected to bolts, which are secured against the blade bearing of the wind turbine. When securing the bolts, the root portion is loaded, resulting in a compression of the root portion and a tensile stress in the bolts. The root portion therefore is subjected to high compressive stress and further to the loads occurring during operation of the wind turbine, wherein the design options, for example size and type of the wind turbine blade, are limited, possibly resulting in failure, and reducing service life of the wind turbine blade.

In order to address these and other drawbacks, EP 3 390 811 B1 provides a connection joint for attaching a wind turbine rotor blade to a rotor hub. The connection joint comprises a mounting insert configured to be coupled to the wind turbine blade. The mounting insert includes a main body having a first end and a second end, a central bore open to the first end and extending toward the second end, and an outer surface configured to interface with the blade. The insert further includes a first tubular extension extending away from the second end of the main body and having an inner surface and an outer surface, wherein each of the inner and outer surfaces are configured to interface with the blade. Furthermore, the mounting insert includes a second tubular extension extending away from the main body and having an inner surface and an outer surface, wherein each of the inner and outer surfaces are configured to interface with the blade. However, in the event of damage of the connection joint, the connection between the mounting insert and a blade laminate holding the mounting insert may fail resulting in a compromised load transfer capacity. When the number of affected mounting inserts reaches a critical amount, the connection joint between the blade and the blade bearing will not be able to transfer the blade loads any longer and may result in blade detachments during operation with a potential structural failure of the blade and turbine.

Documents considered during the patent prosecution are i.a.: WO 2021/155896 A1, EP 2 728 171 A2, US 2021/180572 A1, DE 10 2017 126970 A1 and EP 3 508 718 A1.

It is an object of the present invention to provide a method for improving the fixation of a mounting insert of a blade root without the need for taking the blade off the hub.

For addressing the object the invention proposes a method for retrofitting securing means for securing mounting inserts embedded in a root of a wind turbine blade, which mounting inserts each comprise at least one stud extending axially from the root, wherein the blade being installed at a hub of a wind turbine, characterized by the steps:
- drilling at least one hole perpendicular to the mounting insert from at least one root surface, until the hole extends into or through the mounting insert
- threading the hole at least in the region where the hole extends into or through the mounting insert to adapt it for receiving a threaded bolt
- arranging a reinforcement plate at the root surface, which reinforcement plate comprises at least one opening which corresponds with the hole
- arranging the threaded bolt in the opening and screwing the bolt into the threaded hole for fixating the insert to the plate.

The invention proposes to retrofit transversal holding means to the root, which holding means interact with the mounting inserts. The holding means comprise at least one threaded bolt, which is arranged perpendicular to the longitudinal direction of the usually pipe-like mounting insert, to which mounting insert the bolt is connected. For retrofitting the securing means, at least one hole perpendicular to the mounting insert is drilled from at least one root surface. The depth of the hole is such that it extends into or through the mounting insert respectively the wall of the pipe-like mounting insert. Certainly, the drilled hole or bore also extends through the root material, which usually comprises a respective wall building material building an inner and an outer wall and a filler material arranged between the inner and the outer wall, into which filler material the mounting inserts are embedded.

After drilling the hole, the hole is threaded at least along a part of its length, wherein the thread is provided at least in the hole portion drilled into the mounting insert respectively the wall of the mounting insert. Certainly, if the surrounding filler material etc. has respective mechanical properties, the thread may also be provided in this bore portion.

After providing the thread, a reinforcement plate is arranged at the root surface, from which the hole was drilled into the root. The plate comprises at least one opening, which corresponds to the drilled hole respectively is flush with the drilled hole. The reinforcement plate is fixated by appropriate fixation means, for example and adhesive, to which is referred afterwards. Certainly, also other fixation means like mechanical fixation means or the like may be used.

After arranging the reinforcement plate to the surface of the root a threaded bolt is inserted into the threaded hole and is screwed into the hole, so that it engages from the outer surface, where it rests with a bolt head, through the filler material to the mounting insert, into which it is screwed, as the mounting insert is provided with the threaded hole portion.

Certainly, a number of such mounting inserts are arranged usually equidistant to each other around the circumference of the blade root. All these mounting inserts may be retrofitted with the transversal holding means as described above. Further, not only one of these transversal holding means respectively threaded bolt may be arranged for fixating a single mounting insert, but two or more of these bolts may be fixated in the above described manner for fixating one mounting insert.

All of the inventive steps are preferably performed while the turbine blade is in its mounting position, in which it is attached to the hub respectively the bearing arranged at the hub. There is no need for providing a crane or other complex machinery for taking down the blade when the transversal holding means shall be retrofitted. Therefore, that retrofitting can be performed with minimum costs and downtime. Certainly, the respective steps can also be performed on ground when the blades are dismantled from the hub for whatever reason.

In a first alternative it is possible that at least one further hole is drilled from the opposing second surface of the root until the hole extends into or through the mounting insert respectively the wall of the mounting insert and is at least partially threaded at least in the hole portion provided in the mounting insert, wherein a further reinforcement plate is arranged at the second surface and is fixated by a separate bolt inserted in the respective opening and screwed into the further threaded holes. The retrofitted transversal fixation means respectively the threaded bolts are placed from opposing surfaces and therefore interact with the mounting insert, into which they are screwed, from the first surface and from the second surface. They holes are therefore drilled from both surface sides into the root until they extend into or through the wall of the mounting insert, into which they are screwed. This double side fixation further improves the additional fixation of the mounting insert.

In a second alternative, which may be provided additionally to the first alternative, it is possible that the hole is drilled from the root surface through the mounting insert to the opposing root surface. In this embodiment the hole is realized as a complete through hole which extends from the first surface to the second surface, thereby extending through the whole mounting insert. The bolt used in this embodiment is certainly longer than the bolts used in the first alternative.

If two holes are drilled from both surfaces, it is preferred that the holes drilled from both surfaces are flush with each other, so that also the finally set bolts are flush with each other. The holes opposing each other are a pair of holes, the bolts arranged in these opposing holds are a pair of bolts. Seen in the circumferential direction, the holes drilled at the respective surface are all arranged on a circular line and are, like the mounting inserts, equidistantly arranged. If each mounting insert is fixated by two or more additional transversal bolts, the drilled holes are arranged in separate circular rows. The same certainly holds true for the finally set bolts.

According to a first inventive alternative, the stud, which is arranged in the insert, is removed from the insert before drilling the hole and is rearranged in the insert before or after the bolt is or the bolts are screwed in the threaded holes. Each stud can be removed from the hub side, where a nut is screwed on the stud. After removing the nut, the stud, which is screwed into the insert, can be screwed out of the insert. Now the drilling can be done without any danger of damaging the stud. The drilling, which is preferably done from inside the root, is preferably performed such, that the drill drills through the complete root starting from the inside surface through the insert and ending at the outside surface, thereby drilling an inside hole and an outside hole, which are flush. After drilling the one or the several holes, the other steps are performed. The stud is screwed again into the insert either before the one or the several bolts are screwed in the holes, or after they are screwed in.

In a second alternative the drilling is performed with the stud being arranged in the insert. Here the drilling is done while the stud is in place, which requests some caution during the drilling to avoid any contact of the drill with the stud. The drilling is done from the inside for drilling the inside surface holes and from the outside for drilling the outside holes. This alternative can be used especially when the blade is not connected to the hub but is on the ground.

Further, according to another embodiment of the invention, each reinforcement plate is pre-positioned after the at least one hole is provided, wherein a depth measurement is performed to evaluate the depth of the arrangement of the opening and the hole. This step is to evaluate the necessary length of the bolt respectively the thickness of any washers arranged at the bolt to make sure that the bolt does not interfere with the stud which is present in the mounting insert. The depth measurement may be performed with any appropriate measurement means like a digital depth gauge or the like. The arrangement finally needs to be such that, when the reinforcement plate is arranged and the bolt is set, no interference of the bolt with the stud is given.

For finally adjusting the arrangement one or more washers are arranged underneath the head of the bolt. The number of waters and/or the thickness of the washers, which needs to be arranged, depends on the measured depth of the opening and hole arrangement, into which the bolt engages.

It is advantageous, when the surface or both surfaces are mechanically and/or chemically prepared before the reinforcement plate is attached. This step allows for providing a perfect surface for finally attaching the respective reinforcement plate, so that a perfect interface is realized.

As mentioned above, the respective reinforcement plate is fixated to the respective surface of the root. This is preferably realized with an adhesive, which is arranged on the surface and/or the plate, so that the plate is bonded onto the surface. The adhesive used for bonding the plate to the surface may be any appropriate adhesive which provides perfect bonding between the metal reinforcement plate and the surface of the outer or inner wall, which are usually made of cured resin into which fibers are embedded.

Preferably the reinforcement plate comprises several spacers adapted to distance the plate from the root surface. By using a plate with these spacers the distance of the plate to the surface is constantly the same over the whole plate area. This guarantees that also the thickness of the adhesive provided between the root surface is constant.

After applying the adhesive to the root surface and/or the plate it is possible to use a bespoke tool for preparing the adhesive in terms of its thickness and flatness. This tool may manually be moved along the adhesive.

For providing the hole a drilling device for drilling the hole is used, which drilling device is arranged on a guiding track, which guiding track is preferably arranged inside of the root and extends around the whole inner or outer circumference of the root, along which guiding track the drilling device is movable from one drilling position to another. The guiding track is arranged at an appropriate position inside of the root. Preferably all drilling operations are made from the inside, wherein the respective stud is removed beforehand and replaced after the drilling or when the retrofitting process is finished after the last bolt is set. For fixating the guiding track appropriate mechanical fixation means are used. The drilling device can be moved along the guiding track, so that it can be exactly positioned at the respective drilling position. The drilling device itself may be movable in a direction perpendicular to the guiding track, so that several holes, which are distributed along the length of the mounting insert, may be drilled into the root.

To evaluate the drilling positions, it is possible to use a respective detection device adapted for detecting the respective positions of the mounting inserts, which, as mentioned, are not visible and are embedded in the root material. This is done by the means of a tool which takes the position of the blade studs from outside the blade to the inside of the blade. In an alternative this detection device may for example be an ultrasound detection device or any other comparable devices which allow for non-destructive examination of the exact insert position.

The invention further refers to the wind turbine, comprising a hub with several turbine blades arranged at the hub, which blades are provided with retrofitted securing means according to the method described above. The term "arranged at the hub" comprises the direct arrangement of a turbine blade to the hub or the arrangement of a turbine blade to a bearing which is arranged at the hub respectively is part of the hub and which bearing is used for rotating the blade.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principal illustration of the part of the wind turbine showing the hub and, as a cut view, a blade root, with the drilling device being installed at the inside for drilling holes into the root from the inside surface,
- Fig. 2: a principal illustration of a part of the root, as a cut view, through the root area comprising a mounting insert, illustrating the several holes drilled into the root,
- Fig. 3: a perspective view of the root part of fig. 2, as a cut view, with the depth measurement device and the reinforcement plate being in place,
- Fig. 4: the principal illustration of the root part onto which an adhesive is applied and worked with a bespoke tool,
- Fig. 5: an illustration comparable to fig. 4 after arranging and fixating the reinforcement plate with the bolts and applying further adhesive and working it with a tool, and
- Fig. 6: the principal illustration of a root part, in a cut view, after placing all transverse bolts provided at the inner and outer surface of the blade root.

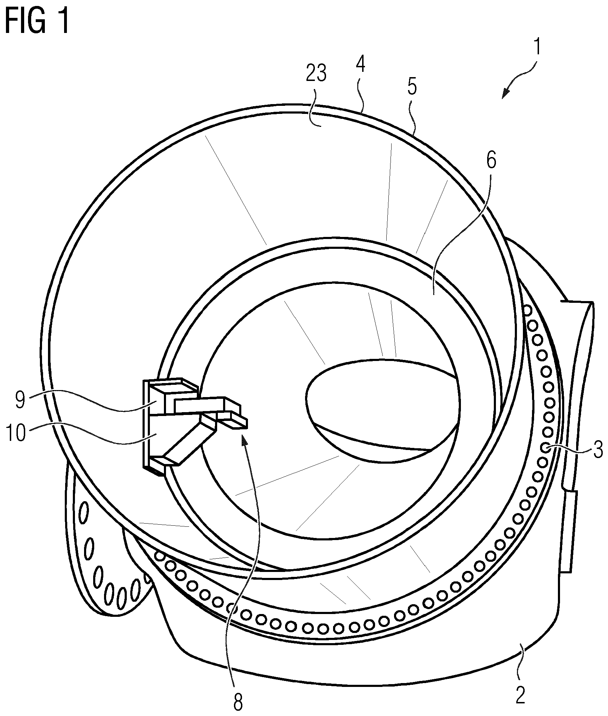

Fig. 1 shows a principal illustration of a part of wind turbine 1, from which a hub 2 is shown. The hub 2 comprises a bearing 3, to which bearing 3 a rotor blade 4 is attached in a commonly known way. The blade 4 is shown as a cut-out illustration for showing the inner of the root 5, by which root 5 the blade 4 is fixated to the bearing 3. In this mounted position additional transversal holding or securing means for additionally securing mounting inserts, which are embedded in the root 5 and which comprise respective studs, via which the blade 4 is fixated to the hub to or the bearing 3, are fixated. For this retrofitting the blade 4 remains in its amounted position and needs not to be taken down to the ground.

In the inside of the root 5 a guiding track 6 is arranged, which in this shown situation may either be fixated to the inner surface 12 of the root 5 or to the bearing 3. The guiding track 6 is used for guiding a drilling device 8, which drilling device 8 is used for drilling holes into the surface respective, which holes are perpendicular to the longitudinal axis of the root 5 and thus perpendicular to mounting inserts embedded in the root 5, which mounting inserts comprise studs or bolts which are used for fixating the blade 4 to the bearing 3. The drilling device 8 comprises a rolling base 9, which is guided on the guiding track 6, so that the drilling device 8 is able to smoothly move along the circular guiding track 6. The drilling device 8 further comprises a drilling tool 10, which is attached to the rolling base 9. The drilling to 10 is movable in a longitudinal direction parallel to the longitudinal direction of the root 5, so that it can be adjusted in this longitudinal direction, along which also the longitudinal, pipe-like mounting inserts are arranged. This longitudinal adjustment allows for adjusting the drilling position in this longitudinal direction, while the circular movement along the guiding track 6 allows for adjusting the drilling position in the circumferential direction. The drilling tool 10 is a magnetic drill and comprises a respective motor and a drill adapted to drill respective holes into the root material the root 5 is made of.

Furthermore, a not shown detection device is used, which detection device may be a separate device or may be arranged together with the drilling tool 10 at the rolling base 9, so that it moves together with the drilling tool 10 along the guiding track 6. The detection device, which for example is a tool which takes the position of the blade studs from outside the blade to the inside of the blade, is used for precisely detecting the position of an embedded mounting insert, which, as mentioned, is embedded in the root 5. A large number of such mounting inserts are embedded around the circumference of the root 5, which can all be precisely detected in their position by means of the detection device. Based on the position information detected by the detection device the exact position of the respective holes which shall be drilled with the drilling tool 10 is determined. The movement of the drilling device 8 along the guiding track 6 may be automatically controlled by a respective control device, which control device receives the information of the detection device and calculates the respective drilling position and controls the respective movement of the drilling device 8 along the guiding track 6 and the motor driving the drill etc.

Before or after installing the guiding track 6 and the drilling device 8, the stud or some studs are removed from the inserts, where the drilling shall be performed, to avoid any damaging of the stud by the drilling process. Only one stud can be removed and all steps are performed, whereafter the stud is replaced and the next cycle begins. In an alternative, several studs can be removed at a time and all steps are performed, whereafter the studs are replaced and the next cycle begins. Removing a small number of studs does not impair the fixation of the blade to the hub. For the drilling process the drilling device 8 is moved along the guiding track 6, while the respective drilling positions are evaluated and the respective holes are drilled, so that, when the drilling is finished, a large number of holes are drilled into the inner surface of the root 5. All these holes are precisely positioned relative to the embedded mounting inserts, as the holes will receive respective transversal threaded bolts which interact respectively engage with the mounting inserts for fixating them. As will be explained later, the respective holes are arranged along a circular line, wherein several of these circular lines will be realized, when, seen in the longitudinal direction, several of these holes are provided regarding a single mounting insert.

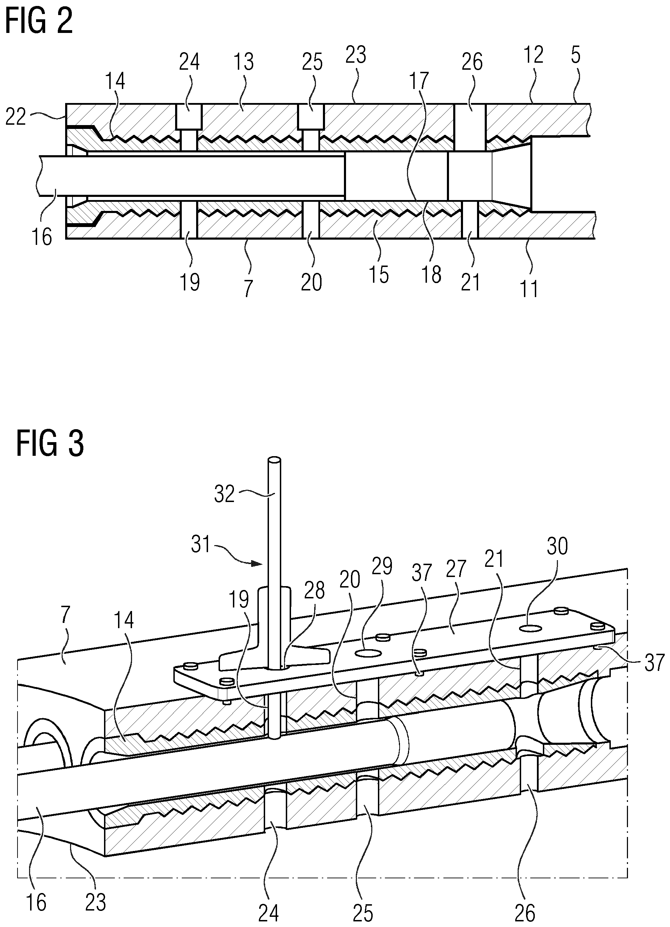

Fig. 2 shows a principal illustration of the root 5 as a cut view. The root 5 comprises an inner wall 12 with the inner surface 23 and an outer wall 11 with an outer surface 7, which are made of the respective wall material comprising a cured resin with embedded fiber mats or the like. Between both walls 11, 12 respective cured or hardened filler material 13 is provided, into which filler material 13 the already mentioned mounting inserts 14 are embedded. These mounting inserts 14 may be made of metal or any other suitable material showing the requested mechanical properties. Each mounting insert 14 has a cylindrical cross-section and is pipe-like. It has, in this example, a waived outer surface 15, which enhances the firm embedding in the filler material 13. The outer surface 15 may also be cylindrical and not waived. Both ends of the mounting insert 14 are funnel-shaped. Each mounting insert 14 comprises a stud 16, which is screwed with a threaded end 17 in the respective threaded portion 18 of the mounting insert 14. In this form fitting area the stud 16 and the mounting insert 14 are connected, outside of this area no connection between these items is given, as the cross-section of fig. 2 shows.

Fig. 2 also shows the respective holes which are drilled in the root 5. At the outer surface 7 respectively the outer wall 11 three holes 19, 20, 21 are drilled into the root material. The holes 19, 20 are arranged in a position closer to the end 22 of the root 5, from which end the stud 16 extends axially. The hole 21 is arranged adjacent to the end of the stud 16, where the mounting insert 14 is empty. As the fig. clearly shows, the holes 19, 20 and 21 extend through the root material. The holes extend through the wall 11 and the filler material 13 and also extend through the respective adjacent wall of the mounting insert 14. For the drilling operation the stud 16 is, as mentioned, preferably removed, so that it cannot be damaged by the drill. In an alternative it is possible that the stud 16 remains mounted and that drilling stops right after the breakthrough of the drill through the wall of the mounting insert 14, which guarantees that the still mounted stud 16 is not damaged. This is true for the holes 19, 20. Less care needs to be taken when drilling the hole 21, as this hole 21 terminates in an empty area of the mounting insert 14.

Further holes 24, 25 and 26 are drilled from the inner surface 23 respectively the inner wall 12 into the root material. Also, these holes 24, 25 and 26 penetrate the outer wall 12, the filler material 13 and the wall of the mounting insert 14. The drilling of the holes 24, 25 is preferably performed in one go together with the holes 19, 20, 21 drilled from the other side, so that both internal and external surfaces respectively holes are drilled in one step by drilling from the inside. For this the blade stud 16 is, as mentioned, preferably removed. But also here, as an alternative, the stud 16 may be still mounted and the drilling is stopped immediately when the drill brakes through the wall of the mounting insert 14 in order to avoid any contact with the stud 16, whereas less care needs to be taken when drilling the hole 26, as this hole 26 terminates in the empty space of the mounting insert 14. As fig. 2 clearly shows, the holes 24, 25 are stepped, comprising a hole portion having a large diameter, which hole portion is provided in the wall 12 and the filler material 13. The hole portion having the smaller diameter is provided in the mounting insert 14. Also, the hole 26 may be stepped. For drilling such as stepped hole a specific stepped drill or two drills having different diameters can be used. All other holes 19, 20, 21 and 26 are simple holes having a constant diameter.

In the next step, all holes 19, 20, 21, 24, 25 and 26 are threaded. Their respective thread is at least cut into the hole portion of the mounting insert 14, as the mounting insert 14, as mentioned, is preferably made of metal, into which material a thread can be easily cut, providing a very tough form fitting fixation of a threaded bolt. For cutting the threads a respective thread cutting device is used. The cutting operation is preferably performed manually with a bespoke cutting tool, but may also be performed with an automatic cutting tool. The cutting tool may also be positioned at the rolling base 9, so that it can be perfectly positioned relative to the drilled hole.

After cutting the threads, a reinforcement plate 27 is positioned at the respective outer surface 7 or the inner surface 23, as shown in fig. 3, in which example the metal reinforcement plate 27 is arranged at the outer surface 7. The reinforcement plate 27 comprises a corresponding number of openings 28, 29, 30. The positions of the openings 28, 29, 30 correspond to the positions of the holes 19, 20 and 21, so that the openings and the holes are flush with each other when the reinforcement plate 27 is arranged at the surface 7.

With a depth measurement device 31 comprising a depth gauge 32 the depth of the arrangement comprising a drilled hole and an opening is measured. This allows for precisely identifying the depth of the arrangement and finally the length of the threaded bolt which shall afterwards be screwed into the arrangement of the respective hole in the opening for fixating the reinforcement plate 27. It is also necessary for determining the total thickness of the single or the several washers which are arranged on the bolt for bearing the head of the bolt on the plate 27. This measurement is performed to guarantee that the bolt screwed into the hole does not contact the stud 16, which is still in the mounting insert 14. The depth measurement is performed for all arrangements at least of the holes 19 and 20 and the openings 28 and 29, so that the respective bolt lengths and washer thicknesses are individually determined.

Certainly, also a depth measurement is performed at the outer surface 7. A respective reinforcement plate 27 is arranged at the outer surface 7, also comprising the same number of openings as holes are provided at this side. After arranging the reinforcement plate 27 the depth is measured by using the depth measurement device 31 and the length of the bolts and the thickness of the washers is determined.

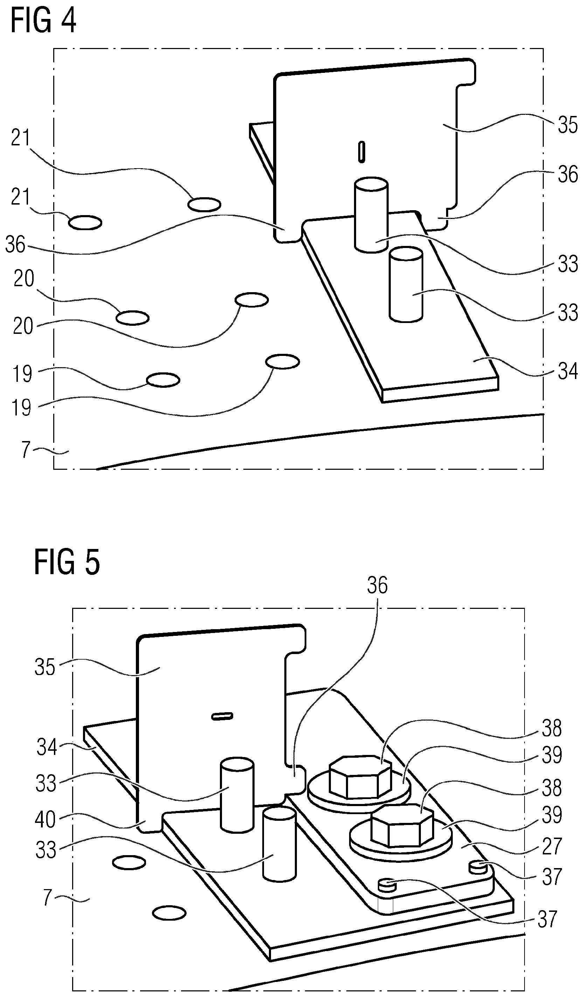

After this step the reinforcement plates 27 are fixated to the respective surface 7, 23. Fig. 4 shows a cut view of the root 5. As is shown here, the surface 7 is provided with a number of holes 19, 20, 21, which are arranged in circular rows. For avoiding that any adhesive gets into the holes 19, 20, 21, respective protection bolts 33, preferably made of a polymer or metal, are inserted in the respective holes 19, 20, 21 and adhesive 34 is provided on the surfaces. The adhesive is worked to make in even and flat with a constant thickness, which working is done by using bespoke tool 35. This tool 35 as a specific geometry with two projections 36 at one side, which delimits a respective shaping side which shapes the adhesive 34 in its width and thickness, as fig. 4 shows. After working the adhesive 34, the protection bolts 33 are removed and the respective reinforcement plate 27 is pressed onto the adhesive 34. The same is done when the reinforcement 27 is fixated at the outer surface 23.

At any time before the adhesive 34 is applied to the respective surface of the root 5, the surface may be machined either mechanically or chemically in order to provide a perfect interface for the bonding of the reinforcement plate 27.

Fig. 5 shows a reinforcement plate 27 already fixated by an adhesive 34. Each reinforcement plates 27 comprises spacers 37, which are also shown in fig. 3, which protect on the side of the reinforcement plate which faces the adhesive 34. These spacers 37 abut on the surface 7 and distance the plate bottom surface of the reinforcement plate 27 from the surface 7 respectively the surface 23. This assures that the distance of the plate 27 is constant over the whole area of the plates 27 covering the surface 7 respectively 23. The thickness of the adhesive 34 is the same over the whole overlapping area. For fixating the reinforcement plate 27, three threaded bolts 38 with respective washers 39 are used, which washers 39 respectively bolts 38 rest on the surface of the plate 27. The threaded bolts 38 are screwed into the respective threaded hole portions in the mounting insert 14, so that a tight fixation of the insert 14 to the reinforcement plate 27 is realized.

Adjacent to the first adhesive 34 further adhesive 34 is applied on the surface 7 for fixating the next reinforcement plate 27, after respective protection bolts 33 are inserted in the respective holes 19, 20, 21. Again the adhesive 34 is worked with the tool 35, which is turned around, so that another shaping side having the projection 40 is used for shaping the adhesive 34. The lower protection 36 rests on the neighbouring reinforcement plate 27, as fig. 5 shows. After working the adhesive 34, the protection bolts 33 are removed. Now another reinforcement plate 27 is attached to the adhesive 34 and bounded on the surface 7 by the adhesive 34, whereafter the bolts 38 and the waters 39 are used for fixating they reinforcement plate 27 by screwing the threaded bolts 38 into the respective threaded portion of the mounting insert 14.

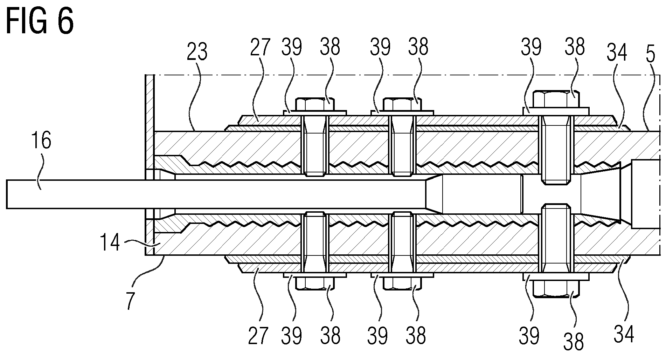

Finally, fig. 6 shows a part of the root 5 in the cut view, with the reinforcement plate 27 being attached via the adhesive 34 to the outer surface 7. The bonded reinforcement plate 27 fixates the bolts 38 in position, wherein the bolts 38 are screwed into the mounting insert 14 securing the same without contacting the stud 16.

On the inner surface 23 another reinforcement plate 27 is bonded onto the surface 23 by an adhesive 34. Also, this bonded reinforcement plate 27 fixates the bolts 38. Again, the threaded bolts 38 are screwed into the respective threaded hole portions provided in the mounting insert 14, and do not contact the stud 16.

As for example fig. 3 shows, a number of mounting inserts 14 are arranged in the circumferential direction. Each of these mounting inserts 14 is retrofitted with the respective transversal securing means, i.e. the respective bolts 38 are screwed into the respective threaded holds or bores provided in the mounting inserts 14. In this way a certain number or all of the mounting inserts 14 can be retrofitted with an additional securing means. It is possible to only retrofit only one insert 14 or a certain number of mounting inserts 14 or even all insert 14 with the additional transversal securing means, for example a group of four mounting inserts arranged next to each other, with a certain number, for example another group of four, mounting inserts 14 without additional securing means, followed by the next group of for example four mounting inserts 14 being provided with the additional securing means etc. Certainly, also each mounting insert 14 may be retrofitted with the securing means.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for retrofitting securing means for securing mounting inserts (14) embedded in a root (5) of a wind turbine blade (4), which mounting inserts (14) each comprise at least one stud (16) extending axially from the root (5), **characterized by** the steps:
- drilling at least one hole (19, 20, 21, 24, 25, 26) perpendicular to the mounting insert (14) from at least one root surface (7, 23), until the hole (19, 20, 21, 24, 25, 26) extends into or through the mounting insert (14)
- threading the hole (19, 20, 21, 24, 25, 26) at least in the region where the hole extends into or through the mounting insert to adapt it for receiving a threaded bolt (38)
- arranging a reinforcement plate (27) at the root surface (7, 23), which reinforcement plate comprises at least one opening (28, 29, 30) which corresponds with the hole (19, 20, 21, 24, 25, 26)
- arranging the threaded bolt (38) through the opening (28, 29, 30) and screwing the bolt (38) into the threaded hole (19, 20, 21, 24, 25, 26) for fixating the insert to the plate (27).

2. Method according to claim 1, **characterized in that** at least one further hole (19, 20, 21, 24, 25, 26) is drilled from the opposing second surface (7, 23) until the hole (19, 20, 21, 24, 25, 26) extends into or through the mounting insert (14) and is at least partly threaded, wherein a further reinforcement plate (27) is arranged at the second surfaces (7, 23) and is fixated by separate bolts (38) inserted through the respective opening (28, 29, 30) and screwed into the further threaded holes (19, 20, 21, 24, 25, 26), or that the hole is drilled from the root surface (7, 23) through the mounting insert (14) to the opposing root surface (7, 23).

3. Method according to claim 2, **characterized in that** two holes (19, 20, 21, 24, 25, 26) drilled from both surfaces (7, 23) are flush with each other.

4. Method according to one of the preceding claims, **characterized in that** the stud (16) is removed from the insert (14) before drilling the hole and is rearranged in the insert (14) before or after the bolt (38) is or the bolts (38) are screwed in the threaded hole, or that the drilling is performed with the stud (16) being arranged in the insert (14).

5. Method according to one of the preceding claims, **characterized in that** each reinforcement plate (27) is pre-positioned after the at least one hole (19, 20, 21, 24, 25, 26) is provided and that a depth measurement is performed to evaluate the depth of the arrangement of the opening (28, 29, 30) and the hole (19, 20, 21, 24, 25, 26).

6. Method according to one of the preceding claims, **characterized in that** one or more washers (39) are arranged underneath a head of the bolt (38).

7. Method according to one of the preceding claims, **characterized in that** the surface or both surfaces (7, 23) are mechanically and/or chemically prepared before the reinforcement plate (27) is attached.

8. Method according to one of the preceding claims, **characterized in that** an adhesive (34) is arranged on the surface (7, 23) and/or the reinforcement plate (27) and that the reinforcement plate (27) is bonded onto the surface (7, 23).

9. Method according to claim 8, **characterized in that** the plate comprises several spacers (37) adapted to distance the reinforcement plate (27) from the surface (7, 23).

10. Method according to one of the preceding claims, **characterized in that** a drilling device (8) for drilling the hole (19, 20, 21, 24, 25, 26) is used, which drilling device (8) is arranged on a guiding track (6), which guiding track (6) is arranged inside or outside of the root (5) and extends around the whole inner or outer circumference of the root (5), along which guiding track (6) the drilling device (8) is movable from one drilling position to another.

11. Method according to one of the preceding claims, **characterized in that** a detection device for detecting the position of an embedded mounting insert (14) is used, based on which information the position for drilling device (8) is determined.

12. Wind turbine, comprising a hub (2) with several turbine blades (4) arranged at the hub (2), which blades (4) are provided with retrofitted securing means according to the method according to one of the preceding claims.

## Patentansprüche

1. Verfahren zum Nachrüsten von Sicherungsmitteln zum Sichern von in einem Fuß (5) einer Windturbinenschaufel (4) eingebetteten Befestigungseinsätzen (14), wobei die Befestigungseinsätze (14) jeweils mindestens einen Bolzen (16) umfassen, der sich axial von dem Fuß (5) erstreckt, **gekennzeichnet durch** die folgenden Schritte:
- Bohren mindestens eines Lochs (19, 20, 21, 24, 25, 26) senkrecht zu dem Befestigungseinsatz (14) von mindestens einer Fußfläche (7, 23), bis sich das Loch (19, 20, 21, 24, 25, 26) in oder durch den Befestigungseinsatz (14) hindurch erstreckt,
- Gewindeschneiden in das Loch (19, 20, 21, 24, 25, 26) mindestens in dem Bereich, in dem sich das Loch in oder durch den Befestigungseinsatz hindurch erstreckt, um es zum Aufnehmen einer Gewindeschraube (38) anzupassen,
- Anordnen einer Verstärkungsplatte (27) an der Fußfläche (7, 23), wobei die Verstärkungsplatte mindestens eine Öffnung (28, 29, 30) umfasst, die dem Loch (19, 20, 21, 24, 25, 26) entspricht,
- Anordnen der Gewindeschraube (38) durch die Öffnung (28, 29, 30) und Schrauben der Schraube (38) in das Gewindeloch (19, 20, 21, 24, 25, 26) zum Fixieren des Einsatzes an der Platte (27).

2. Verfahren nach Anspruch 1, **dadurch gekennzeichnet, dass** mindestens ein weiteres Loch (19, 20, 21, 24, 25, 26) von der gegenüberliegenden zweiten Fläche (7, 23) gebohrt wird, bis sich das Loch (19, 20, 21, 24, 25, 26) in den Befestigungseinsatz (14) oder durch diesen hindurch erstreckt und mindestens teilweise mit einem Gewinde versehen ist, wobei eine weitere Verstärkungsplatte (27) an den zweiten Flächen (7, 23) angeordnet und durch separate Schrauben (38) fixiert wird, die durch die jeweilige Öffnung (28, 29, 30) eingesetzt und in die weiteren Gewindelöcher (19, 20, 21, 24, 25, 26) geschraubt werden, oder dass das Loch von der Fußfläche (7, 23) durch den Befestigungseinsatz (14) an der gegenüberliegenden Fußfläche (7, 23) gebohrt wird.

3. Verfahren nach Anspruch 2, **dadurch gekennzeichnet, dass** zwei Löcher (19, 20, 21, 24, 25, 26), die von beiden Flächen (7, 23) gebohrt werden, bündig miteinander abschließen.

4. Verfahren nach einem der vorhergehenden Ansprüche, **dadurch gekennzeichnet, dass** der Bolzen (16) vor dem Bohren des Lochs aus dem Einsatz (14) entfernt wird und in dem Einsatz (14) neu angeordnet wird, bevor oder nachdem die Schraube (38) oder die Schrauben (38) in das Gewindeloch geschraubt wird/werden, oder dass das Bohren mit dem Bolzen (16) durchgeführt wird, der in dem Einsatz (14) angeordnet ist.

5. Verfahren nach einem der vorhergehenden Ansprüche, **dadurch gekennzeichnet, dass** jede Verstärkungsplatte (27) vorpositioniert ist, nachdem das mindestens eine Loch (19, 20, 21, 24, 25, 26) bereitgestellt ist, und dass eine Tiefenmessung durchgeführt wird, um die Tiefe der Anordnung der Öffnung (28, 29, 30) und des Lochs (19, 20, 21, 24, 25, 26) zu bewerten.

6. Verfahren nach einem der vorhergehenden Ansprüche, **dadurch gekennzeichnet, dass** eine oder mehrere Unterlegscheiben (39) unter einem Kopf der Schraube (38) angeordnet ist/sind.

7. Verfahren nach einem der vorhergehenden Ansprüche, **dadurch gekennzeichnet, dass** die Fläche oder beide Flächen (7, 23) mechanisch und/oder chemisch vorbereitet werden, bevor die Verstärkungsplatte (27) angebracht wird.

8. Verfahren nach einem der vorhergehenden Ansprüche, **dadurch gekennzeichnet, dass** ein Klebstoff (34) auf der Fläche (7, 23) und/oder der Verstärkungsplatte (27) angeordnet ist und dass die Verstärkungsplatte (27) auf die Fläche (7, 23) geklebt wird.

9. Verfahren nach Anspruch 8, **dadurch gekennzeichnet, dass** die Platte mehrere Abstandshalter (37) umfasst, die dazu angepasst sind, die Verstärkungsplatte (27) von der Fläche (7, 23) zu beabstanden.

10. Verfahren nach einem der vorhergehenden Ansprüche, **dadurch gekennzeichnet, dass** eine Bohrvorrichtung (8) zum Bohren des Lochs (19, 20, 21, 24, 25, 26) verwendet wird, wobei die Bohrvorrichtung (8) auf einer Führungsschiene (6) angeordnet ist, wobei die Führungsschiene (6) innerhalb oder außerhalb des Fußes (5) angeordnet ist und sich um den gesamten Innen- oder Außenumfang des Fußes (5) erstreckt, entlang der Führungsschiene (6) die Bohrvorrichtung (8) von einer Bohrposition zu einer anderen bewegbar ist.

11. Verfahren nach einem der vorhergehenden Ansprüche, **dadurch gekennzeichnet, dass** eine Erfassungsvorrichtung zum Erfassen der Position eines eingebetteten Befestigungseinsatzes (14) verwendet wird, auf deren Grundlage die Position für die Bohrvorrichtung (8) bestimmt wird.

12. Windturbine, umfassend eine Nabe (2) mit mehreren an der Nabe (2) angeordneten Turbinenschaufeln (4), wobei die Schaufeln (4) mit nachgerüsteten Sicherungsmitteln gemäß dem Verfahren nach einem der vorhergehenden Ansprüche versehen sind.

## Revendications

1. Procédé de rattrapage de moyens de fixation pour fixer des inserts de montage (14) intégrés dans une racine (5) d'une pale d'éolienne (4), lesquels inserts de montage (14) comprennent chacun au moins un goujon (16) s'étendant axialement depuis la racine (5), **caractérisé par** les étapes de :
- le perçage d'au moins un trou (19, 20, 21, 24, 25, 26) perpendiculaire à l'insert de montage (14) depuis au moins une surface de racine (7, 23), jusqu'à ce que le trou (19, 20, 21, 24, 25, 26) s'étende dans l'insert de montage (14) ou à travers celui-ci ;
- le taraudage du trou (19, 20, 21, 24, 25, 26) au moins dans la région où le trou s'étend dans ou à travers l'insert de montage pour l'adapter afin de recevoir un boulon fileté (38) ;
- l'agencement d'une plaque de renfort (27) au niveau de la surface de racine (7, 23), laquelle plaque de renfort comprend au moins une ouverture (28, 29, 30) qui correspond au trou (19, 20, 21, 24, 25, 26) ;
- l'agencement du boulon fileté (38) à travers l'ouverture (28, 29, 30) et le vissage du boulon (38) dans le trou taraudé (19, 20, 21, 24, 25, 26) pour fixer l'insert à la plaque (27).

2. Procédé selon la revendication 1, **caractérisé en ce qu'**au moins un autre trou (19, 20, 21, 24, 25, 26) est percé depuis la seconde surface opposée (7, 23) jusqu'à ce que le trou (19, 20, 21, 24, 25, 26) s'étende dans l'insert de montage (14) ou à travers celui-ci et est au moins partiellement taraudé, dans lequel une autre plaque de renfort (27) est agencée au niveau des secondes surfaces (7, 23) et est fixée par des boulons séparés (38) insérés à travers l'ouverture respective (28, 29, 30) et vissés dans les autres trous taraudés (19, 20, 21, 24, 25, 26), ou **en ce que** le trou est percé depuis la surface de racine (7, 23) à travers l'insert de montage (14) jusqu'à la surface de racine opposée (7, 23).

3. Procédé selon la revendication 2, **caractérisé en ce que** deux trous (19, 20, 21, 24, 25, 26) percés depuis les deux surfaces (7, 23) sont en affleurement l'un avec l'autre.

4. Procédé selon l'une quelconque des revendications précédentes, **caractérisé en ce que** le goujon (16) est retiré de l'insert (14) avant le perçage du trou et est réagencé dans l'insert (14) avant ou après que le boulon (38) est vissé ou les boulons (38) sont vissés dans le trou taraudé, ou **en ce que** le perçage est réalisé avec le goujon (16) étant agencé dans l'insert (14).

5. Procédé selon l'une quelconque des revendications précédentes, **caractérisé en ce que** chaque plaque de renfort (27) est prépositionnée après que l'au moins un trou (19, 20, 21, 24, 25, 26) est fourni et **en ce qu'**une mesure de profondeur est réalisée pour évaluer la profondeur de l'agencement de l'ouverture (28, 29, 30) et du trou (19, 20, 21, 24, 25, 26).

6. Procédé selon l'une quelconque des revendications précédentes, **caractérisé en ce qu'**un ou plusieurs éléments de rondelles (39) sont agencés sous une tête du boulon (38).

7. Procédé selon l'une quelconque des revendications précédentes, **caractérisé en ce que** la surface ou les deux surfaces (7, 23) sont préparées mécaniquement et/ou chimiquement avant que la plaque de renfort (27) ne soit fixée.

8. Procédé selon l'une quelconque des revendications précédentes, **caractérisé en ce qu'**un adhésif (34) est agencé sur la surface (7, 23) et/ou la plaque de renfort (27) et **en ce que** la plaque de renfort (27) est collée sur la surface (7, 23).

9. Procédé selon la revendication 8, **caractérisé en ce que** la plaque comprend plusieurs entretoises (37) adaptées pour distancer la plaque de renfort (27) de la surface (7, 23).

10. Procédé selon l'une quelconque des revendications précédentes, **caractérisé en ce qu'**un dispositif de perçage (8) pour percer le trou (19, 20, 21, 24, 25, 26) est utilisé, lequel dispositif de perçage (8) est agencé sur un rail de guidage (6), lequel rail de guidage (6) est agencé à l'intérieur ou à l'extérieur de la racine (5) et s'étend autour de toute la circonférence intérieure ou extérieure de la racine (5), le long duquel rail de guidage (6) le dispositif de perçage (8) est mobile d'une position de perçage à une autre.

11. Procédé selon l'une quelconque des revendications précédentes, **caractérisé en ce qu'**un dispositif de détection pour détecter la position d'un insert de montage intégré (14) est utilisé, en fonction desquelles des informations sur la position pour le dispositif de perçage (8) sont déterminées.

12. Éolienne, comprenant un moyeu (2) avec plusieurs pales d'éolienne (4) agencées au niveau du moyeu (2), lesquelles pales (4) sont pourvues de moyens de fixation de rattrapage selon le procédé selon l'une quelconque des revendications précédentes.
